# EUROPEAN PATENT APPLICATION

(11) **EP 4 596 162 A1**
(43) Date of publication of application: **06.08.2025**
(21) Application number: 25153953.2
(22) Date of filing: 24.01.2025
(51) Int. Cl.: B23K 26/382, B23B 35/00, B23Q 17/24, G05B 19/402

(54) **METHOD AND SYSTEM FO DRILLING HOLES IN A WORKPIECE**

(30) Priority: 24.01.2024 US 202418421676
(71) Applicant: PRATT & WHITNEY CANADA CORP., Longueuil, Québec J4G 1A1 (CA)
(72) Inventor: RAHMAN, Mizanur, (01BE5) Longueuil, J4G 1A1 (CA); LAMARRE, Simon G., (01BE5) Longueuil, J4G 1A1 (CA)
(74) Representative: Dehns

(57) **Abstract**

A method of and system (20) for drilling holes in a workpiece. The method includes: providing a nominal file representation of the workpiece; identifying a workpiece region having a hole using the nominal file, wherein the nominal file provides a nominal position and orientation for the hole; using a workpiece geometry measuring device (24) to scan the workpiece region, the scanning produces a scan lines that include a plurality of data points spaced apart by a data point spacing that is a function of the geometry of the hole, and wherein the scan lines are spaced apart from one another by a scan line spacing that is a function of the geometry of the hole; using the nominal position and orientation of the hole and the scan line data points to determine an actual position and orientation for the hole; and drilling the hole using the determined actual position and orientation.

## Description

### BACKGROUND OF THE INVENTION

### 1. Technical Field

The present disclosure relates generally to a method and system for drilling holes in a workpiece in general, and a method and system for drilling holes in a workpiece that utilizes workpiece scanning in combination with a nominal digital file of the workpiece in particular.

### 2. Background Information

Multi-dimensional components or parts utilized within a gas turbine engine are often designed using a computer aided design (CAD) software that creates a digital model of the part to be produced. The term "nominal" may be used to refer to the part or portions there of (e.g., surfaces, etc.) as defined in the digital model. The same CAD files can be used during production of the part. During production, the actual physical characteristics of the part may deviate from the nominal characteristics. To determine any such variance, it is known to use metrological techniques and devices to ascertain the actual physical characteristics of the part. Physical probe devices or laser scanners can be used to measure three-dimensional part geometry and produce a digital file representative of the same. For larger and/or complex parts that require substantial precision, the digital files representative of the part can be very large, and slow to process, difficult to store, and the like.

What is needed is an improved methodology for producing parts using metrological measurements.

### SUMMARY

According to an aspect of the present disclosure, a method of drilling holes in a workpiece is provided. The method includes: providing a nominal file, wherein the nominal file includes a nominal digital representation of the workpiece; identifying a workpiece region having a hole using the nominal file, the hole having a geometry, wherein the nominal file provides a nominal hole position and a nominal hole orientation for the hole; using a workpiece geometry measuring device to scan at least a portion of the workpiece region, wherein the scanning includes producing a plurality of scan lines, each scan line including a plurality of data points spaced apart from one another by a data point spacing along the scan line, wherein the data point spacing is a function of the geometry of the hole, and wherein the scan lines within the plurality of scan lines are spaced apart from one another by a scan line spacing that is a function of the geometry of the hole; using the nominal hole position and the nominal hole orientation for the hole and the scan line data points in the portion of the workpiece region to determine an actual position and an actual orientation for the hole to be drilled in the workpiece; and drilling the hole in the workpiece using the determined actual position and orientation.

In any of the aspects or embodiments described above and herein, the method may include identifying a datum feature of the workpiece using the nominal file and using the workpiece geometry measuring device to scan at least a portion of the datum feature, wherein the scanning of the datum feature includes producing a plurality of datum feature scan lines, and may include determining an orthogonal origin for the workpiece using the nominal file and the datum feature scan lines.

In any of the aspects or embodiments described above and herein, the step of identifying the workpiece region having the hole may include using the determined orthogonal origin.

In any of the aspects or embodiments described above and herein, the workpiece region may be a limited region of the workpiece.

In any of the aspects or embodiments described above and herein, within the step of using the workpiece geometry measuring device to scan the portion of the workpiece region, the scanning may be limited to the portion of the workpiece region.

In any of the aspects or embodiments described above and herein, the method may include using the nominal file to identify a transition surface contiguous with the workpiece region, and defining an exclusion zone contiguous with the transition surface, and directing the workpiece geometry measuring device to scan the portion of the workpiece region such that the exclusion zone is disposed between the transition surface and the portion of the workpiece region to be scanned.

In any of the aspects or embodiments described above and herein, the data point spacing may be a function of a tolerance data associated with the hole.

In any of the aspects or embodiments described above and herein, the data point spacing may be less than or equal to a radius of the hole.

In any of the aspects or embodiments described above and herein, the scan line spacing may be a function of a tolerance data associated with the hole.

In any of the aspects or embodiments described above and herein, the scan line spacing may be such that at least two scan lines intersect with the hole.

In any of the aspects or embodiments described above and herein, the plurality of scan lines may include at least one or more first scan lines that do not intersect with the hole and are disposed on a first side of the hole, and may include at least one or more second scan lines that do not intersect with the hole and are disposed on a second side of the hole, wherein the second side of the hole is opposite the first side of the hole.

In any of the aspects or embodiments described above and herein, the number of scan lines may be equal to a predetermined search radius divided by the scan line spacing.

In any of the aspects or embodiments described above and herein, the scan lines that intersect with the hole may extend beyond the hole on both sides of the hole in the direction of the scan lines.

In any of the aspects or embodiments described above and herein, the method may include using a clocking feature to locate the workpiece region relative to a determined orthogonal origin.

In any of the aspects or embodiments described above and herein, for an annular workpiece, the clocking feature may be configured to circumferentially locate the workpiece region.

In any of the aspects or embodiments described above and herein, the step of using the nominal hole position and the nominal hole orientation for the hole and the scan line data points in the portion of the workpiece region to determine the actual position and orientation for the hole to be drilled in the workpiece, may include comparing the nominal file and the plurality of data points to determine a correlation between the nominal file and the plurality of data points, and using the correlation to determine a compensation between the nominal file and the plurality of data points, and the determination of the actual position and the actual orientation for the hole to be drilled in the workpiece is produced using the compensation.

According to an aspect of the present disclosure, a system for drilling holes in a workpiece is provided. The system includes a computer numerical controlled (CNC) laser drilling machine, a workpiece geometry measuring device, and a system controller. The workpiece geometry measuring device is configured to scan the workpiece and produce a scan line including a plurality of data points spaced apart from one another by a data point spacing along the scan line. The system controller is in communication with the CNC laser drilling machine, the workpiece geometry measuring device, and a non-transitory memory storing instructions, which instructions when executed cause the system controller to: access a nominal file that includes a nominal digital representation of the workpiece; identify a workpiece region having a hole using the nominal file, the hole having a geometry, wherein the nominal file provides a nominal hole position and a nominal hole orientation for the hole; control the workpiece geometry measuring device to scan at least a portion of the workpiece region, wherein the scanning includes producing a plurality of scan lines, each scan line including a plurality of data points spaced apart from one another by a data point spacing along the scan line, wherein the data point spacing is a function of the geometry of the hole, and wherein the scan lines within the plurality of scan lines are spaced apart from one another by a scan line spacing that is a function of the geometry of the hole; use the nominal hole position and the nominal hole orientation for the hole and the scan line data points in the portion of the workpiece region to determine an actual position and an actual orientation for the hole to be drilled in the workpiece; and control the CNC laser drilling machine to drill the hole in the workpiece using the determined actual position and orientation.

In any of the aspects or embodiments described above and herein, the instructions when executed may control the workpiece geometry measuring device to limit the scanning to the portion of the workpiece region.

In any of the aspects or embodiments described above and herein, the plurality of scan lines may include at least two said scan lines that intersect with the hole, at least one or more first scan lines that do not intersect with the hole and are disposed on a first side of the hole, and at least one or more second scan lines that do not intersect with the hole and are disposed on a second side of the hole, wherein the second side of the hole is opposite the first side of the hole.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic representation of a computer numerical control laser drilling machine embodiment that may be used with the present disclosure.
FIG. 2 is a block diagram of a machining system that may be configured pursuant to the present disclosure.
FIGS. 3 and 4 diagrammatically illustrate a pair of scan lines on a datum surface.
FIG. 5 diagrammatically illustrates a pattern of data points disposed on a datum surface.
FIG. 6 diagrammatically illustrates a datum surface with a plurality of holes to be drilled and a plurality on scan lines disposed relative to the holes to be drilled.

### DETAILED DESCRIPTION

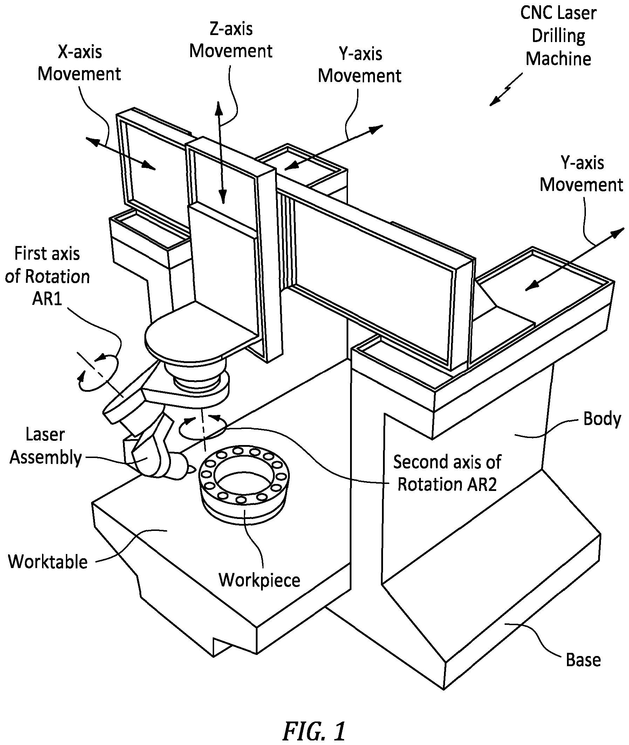

FIG. 1 diagrammatically illustrates an example of a computer numerical control (CNC) laser drilling machine. The laser drilling high speed drilling machine includes a base, a body, a worktable, and a laser assembly movably connected to the body. The worktable is fixed and the laser drilling machine is configured for five degrees-of-freedom movement. Linear motor drives are used to move the laser assembly along the X-axis, the Y-axis, and the Z-axis. Linear rotational motor drives enable the laser assembly to be rotated about a first axis of rotation AR1 and a second axis of rotation AR2. One or more controllers (not shown) provides motion synchronization between the linear motor drives to produce the five degrees of freedom between the laser head and the workpiece. Control systems for operating the laser are known and the present disclosure is not limited to any particular laser control system. The CNC laser drilling machine shown in FIG. 1 is provided as a non-limiting example of a machine tool with which the present disclosure may be implemented. An acceptable example of a CNC laser drilling machine is disclosed in U.S. Patent No. 7,538,296, entitled "High Speed Laser Drilling Machine and Method", commonly assigned herewith and which is hereby incorporated by reference in its entirety. The present disclosure is not limited to this example of machine tool and may be used with other machine tool types, including but not limited to a robotic machine tool.

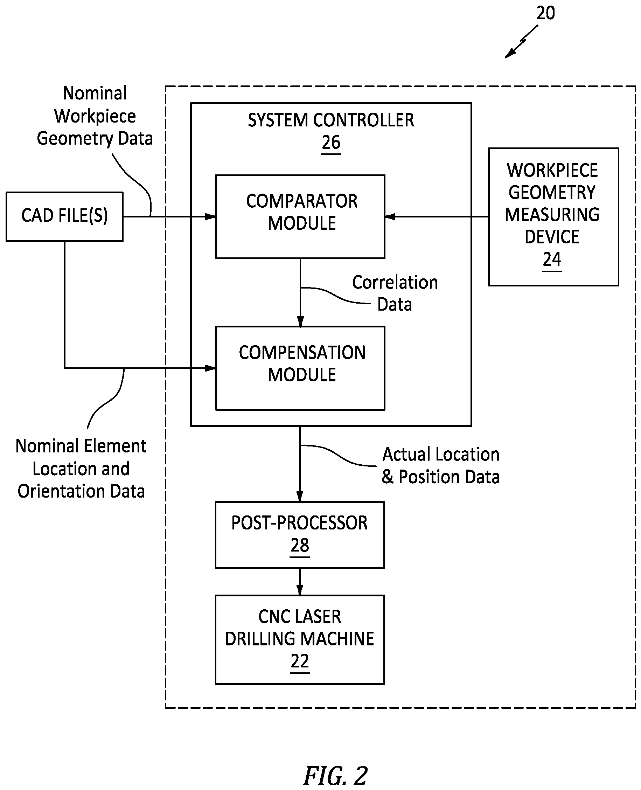

The block diagram of FIG. 2 diagrammatically illustrates a machining system 20 that may be configured pursuant to the present disclosure. The machining system 20 includes a CNC laser drilling machine 22 (e.g., like that shown in FIG. 1), a workpiece geometry measuring device 24, and a system controller 26. The present disclosure utilizes a device for measuring the geometry of a workpiece in three dimensions; i.e., a "workpiece geometry measuring device 24". The device produces a digital data file that may be used to produce a 3D model of the workpiece, and that model is representative of the actual physical geometry of the workpiece. Various different devices for measuring the geometry of a workpiece in three dimensions are known. Non-contact geometry measuring devices include line laser scanning machines, point laser scanning machines, tomography machines, and photogrammetry measurement devices. Contact geometry measuring devices include coordinate measuring machines (CMM). The present disclosure will be described herein in terms of using workpiece geometry measuring device 24 in the form of a laser scanning machine that is configured to produce a plurality of data points along a line, but is not limited to this specific type of workpiece geometry measuring device 24. Regardless of the type of workpiece geometry measuring device 24, these devices typically produce very large digital data files when used to scan the entirety of a workpiece.

The system controller 26 may be independent of the CNC laser drilling machine 22 (as shown in FIG. 2), or it may be integrated with the CNC laser drilling machine 22. To facilitate the description herein, the system controller 26 is described as an independent system component in communication with the system controller 26 but is not limited thereto. The block diagram of FIG. 2 also diagrammatically illustrates the workpiece geometry measuring device 24 as an independent component in communication with the system controller 26. In some embodiments, the machine tool (e.g., the CNC laser drilling machine 22) may be configured to selectively function as a workpiece geometry measuring device 24. For example, the laser assembly utilized to machine a workpiece may be replaced with a laser line scanning head that enables the machine tool to function as a workpiece geometry measuring device 24. Alternatively, the machine tool (e.g., the CNC laser drilling machine 22) may include a workpiece geometry measuring device 24 (independent of the laser assembly) that is capable of measuring the workpiece and producing a digital model of the measured workpiece. The present disclosure is not limited to any particular configuration of a workpiece geometry measuring device 24 other than one that produces a digital point data in the manner described herein. To facilitate the description herein, the workpiece geometry measuring device 24 is described as an independent component but is not limited thereto. In some embodiments, the machining system 20 may include a post-processor as will be detailed herein.

The system controller 26 is in communication with other system components such as the CNC laser drilling machine 22, the workpiece geometry measuring device 24, the post-processor 28 (if included), and other system components as may be included. The system controller 26 may be in communication with system components to control the operation of the respective component and/or to receive signals (e.g., digital data files) from and/or transmit signals to that component to perform the functions described herein. The system controller 26 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the system to accomplish the same algorithmically and/or coordination of system components. The system controller 26 includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The system controller 26 may include, or may be in communication with, an input device that enables a user to enter data and/or instructions, and may include, or be in communication with, an output device configured, for example to display information (e.g., a visual display or a printer), or to transfer data, etc. Communications between the system controller 26 and other system components may be via a hardwire connection or via a wireless connection.

The system controller 26 may include a comparator module and a compensation module; e.g., in the form of stored instructions. The comparator module is configured to receive digital data files representative of the nominal workpiece geometry and other digital data files representative of the actual workpiece geometry. The digital data files representative of the nominal workpiece geometry are typically CAD program files (referred to hereinafter as a "CAD file"). FIG. 2 diagrammatically illustrates the CAD file as being disposed outside of the machining system 20 because it is produced outside of the machining system 20. During operation of the machining system 20, the CAD file may be stored in the memory of the system controller 26, or the system controller 26 may be in communication with the CAD file stored in a remote device (e.g., a remote server) that is in communication with the system controller 26. The digital data files representative of the actual workpiece geometry (referred hereinafter as a "scanned file") are produced by the workpiece geometry measuring device 24. The comparator performs a 3D comparison between the digitized actual surface (using the scanned file) and the nominal surface (using the CAD file) to find a correlation or best fit therebetween. The present disclosure is not limited to any particular methodology for performing the 3D comparison between the digitized actual surface and the nominal surface to find a correlation or best fit therebetween.

The compensation module receives the correlation data between the digitized actual surface and the nominal surface from the comparator module. The term "actual" as applied herein to a part, surface, geometrical element, etc. is intended to refer to the real, physical part, surface, geometrical element, etc. at various stages of the manufacturing process, including any variation brought by that process. As such, actual parts manufactured based on the same nominal part definition may be slightly different from one another and from the nominal part definition. The compensation module also receives the nominal location and orientation of each machined element of the workpiece provided by the CAD file. The term "machined element" as used herein is intended to encompass a feature that defines at least a portion of a workpiece, such as for example a surface, a profile, an angle, a plane, a slot, a hole, a groove, or the like, as well as one or many surfaces that can be used as datum. The compensation module is configured (e.g., via stored instructions) to determine the actual location and the actual orientation for each element. The compensation module thus aligns the digitized actual surface and the nominal surface following the best fit found by the comparator, and projects the nominal location of each machined element on the digitized actual surface to obtain the corresponding actual location and orientation for that machined element for production purposes.

In some embodiments / machine tool applications, it may be desirable to process the actual location and orientation data file using a post-processor 28 upstream of the machine tool. The post-processing may be used to express the machined element actual location and orientation data in an appropriate machine coordinate system usable by the machine tool. In some embodiments, post-processing may not be necessary.

The methodology of the comparator module and the compensation module described heretofore represent an example of how an actual location and orientation of a machined element of a workpiece may be determined using a CAD file and a scanned file. The present disclosure is not limited to any particular methodology of determining an actual location and orientation of a machined element of a workpiece other than one that uses a CAD file and a scanned file. An acceptable example of such a methodology is disclosed in U.S. Patent No. 9,417,624, entitled "Method of Making a Part and Related System", which is commonly assigned with the present application, which patent is hereby incorporated by reference in its entirety. The present disclosure is not limited to the methodology disclosed in U.S. Patent No. 9,417,624.

As stated above, a scanned file produced by a workpiece geometry measuring device 24 scanning the entirety of a workpiece may be prohibitively large, thereby slowing the processing speed, increasing the file storage demands, increasing the computing requirements of the machining system 20, and the like. The present disclosure provides a distinct improvement that obviates the need to use a workpiece geometry measuring device 24 to digitally scan the entirety of a workpiece, and thereby avoids the issues associated with a prohibitively large size scanned file.

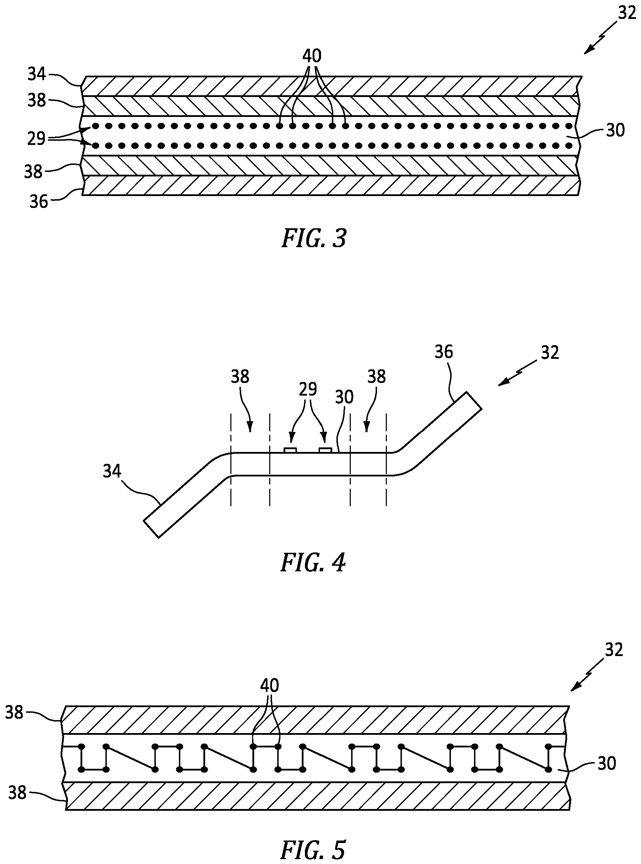

During production of a workpiece, the workpiece may be initially located using the CAD file to determine one or more datum features that can be used locating purposes. The workpiece geometry measuring device 24 may then be used to perform a plurality of line scans on a surface of the respective datum feature. To facilitate the description herein, the workpiece geometry measuring device 24 will be described as a non-contact laser scanning machine configured to generate workpiece geometric data points along a line; i.e., a "scan line". In this manner, all of the data points are disposed along the line. The workpiece geometric data points include data representative of the location of the surface being scanned at the position where the data point is taken. An appropriate laser data point size can be selected based on the application at hand. To be clear, the data points in a scan line as used in the present disclosure are all disposed along the scan line. This is in contrast to a scanning process that scans an area (e.g., points distributed in a plane along two different axes (e.g., X and Y axes). An example of a scanning process that scans an area is sometimes called a "line scan", but that process involves collecting multiple data points along a line (e.g., the line extending along a first axis), and the process involves scanning an area by collecting data points along that line, and moving that line along a second axis that is orthogonal to the first axis (collecting data points along the way) to thereby scan an area. The present "scan line" as that term is used herein, refers to scanned geometric data points along a line and the line is not traversed during the scanning process. The number of scan lines utilized to locate a given datum surface may be selected based on the geometry of the datum surface or machine element being scanned. Examples of how scan lines are used are provided hereinafter. For purposes of initially locating a workpiece, a number of scan lines sufficient to establish an origin on the workpiece are performed. For a given datum surface, that surface may be located using at least two scan lines spaced apart from one another. The scan lines on the datum surface are preferably spaced apart from any transition surfaces associated with the datum plane by a distance sufficient to ensure the scan lines are not associated with the transition surface. FIGS. 3 and 4 diagrammatically illustrate a pair of scan lines 29 (comprised of data points 40) on a datum surface 30 of a workpiece 32 spaced apart from a first transition surface 34 and a second transition surface 36 associated with the datum plane. The CAD file can be used to identify the existence of any transitional surface relative to the datum plane, and the scan lines 29 can be taken at positions sufficiently spaced apart from the transition surfaces 34, 36. The area between a transition surface 34, 36 and the portion of the datum surface 30 that is acceptable for scan lines 29 may be referred to as an boundary exclusion zone 38; e.g., see FIGS. 3 and 4. A non-limiting example of how a boundary exclusion zone 38 may be defined is by using the width of the datum surface 30, and defining each boundary exclusion zone 38 as a percentage of the width of the datum surface 30; e.g., the lateral 25% of the width of the datum surface 30 is defined as the boundary exclusion zone 38 on each side of the datum surface 30. The scan lines 29 on the datum surface 30 are preferably spaced apart from any transition surfaces 34, 36 associated with the datum surface 30 by a distance sufficient to ensure the scan lines 29 are not associated with the transition surface 34, 36. In some instances, the above-described methodology of using boundary exclusion zones 38 may also be used when locating and positioning machine elements (e.g., drilled holes) as will be described herein. The datum surface scan lines 29 may be subjected to a process like that described above wherein the scan line data points and the relevant CAD file data is compared and compensated as necessary to determine the actual location and orientation of the datum surface 30. In this manner an orthogonal origin (X, Y, Z) can be determined for the workpiece 32, thereby locating the workpiece 32.

As an alternative to using scan lines 29, some embodiments may use a grid scan scanning process wherein multiple data points 40 within a grid are collected. The grid scan may follow a pattern that collects scan data from data points disposed within the pattern, but does not collect scan data from every data point disposed within an orthogonal grid. FIG. 5 diagrammatically illustrates a pattern of data points disposed on a surface.

Once the orthogonal origin (X, Y, Z) of the workpiece 32 is determined, the CAD file may be used to identify workplace regions based on selected features of the workpiece 32. Alternatively, if a fixture is used to hold the workpiece 32, workpiece regions may be located based on selected features of the fixture. In this manner, workpiece regions separated from one another can be accessed for machining (e.g., laser drilling) without the need to scan the workpiece 32 between regions of interest. This processing technique may be referred to as a clocking feature, and has particular merit when the workpiece 32 is an annular structure, wherein the clocking is used to determine circumferential positions of the workpiece 32. Once the position of the desired workpiece region is located, then the process of using scan lines 29 to gather specific information regarding position and orientation can be performed. To be clear, the workpiece regions are limited regions of the entirety of the workpiece 32; e.g., regions that include the holes to be drilled. By utilizing limited regions of the workpiece 32, the present disclosure substantially decreases the amount of workpiece surface that requires scanning.

As detailed herein, the present disclosure provides considerable merit when the workpiece 32 is being machined with a CNC laser drilling machine 22. Gas turbine engines often include annular components that include a substantial number of apertures disposed in a wall of the component. A non-limiting example of such a component is a combustor liner. The apertures in a combustor liner permit airflow through the apertures for cooling purposes. With the orthogonal origin of the workpiece is determined, the machining process may access the CAD file to identify a workplace region where holes are to be drilled.

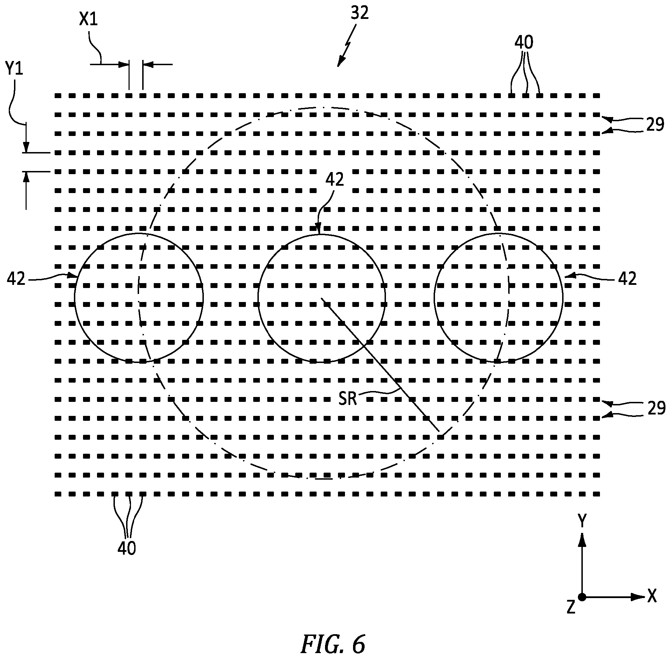

Referring to FIG. 6, to locate and orient the positions where the holes 42 are to be drilled, the present method performs a number of scan lines 29 in the identified workplace 32 region where holes 42 are to be drilled. Typically, the spacing between data points 40 in a scan line 29 is uniform, but that is not required. To facilitate the description herein, however, the scan lines 29 will be described as having uniformly spaced data points 40. The spacing between data points 40 (i.e., data point spacing - see "X1") within a scan line 29 may be varied depending on the size of the holes 42 to be drilled. The data point spacing is chosen such that the surface data produced by the scan lines 29 is adequate to locate the holes 42 with an accuracy that is commensurate with the positional tolerancing of the holes 42. An example of data point spacing within a scan line 29 that is typically acceptable for holes 42 is a data point spacing that is equal to or less than the radius of the hole 42 to be drilled. In some embodiments, the data point spacing may be chosen as a function of the hole 42 positional tolerancing. The present disclosure is not limited to these data point spacing criterion examples; e.g., if the holes 42 to be drilled are non-circular, an acceptable data point spacing may be chosen by other criterion.

The spacing between scan lines 29 ("scan line spacing" - see "Y1") is also chosen such that the surface data produced by the scan lines 29 is adequate to locate the holes 42 with an accuracy that is commensurate with the positional tolerancing of the holes 42. An example of scan line spacing that is typically acceptable for holes 42 is a scan line spacing wherein at least two scan lines 29 will intersect with the hole 42 to be drilled. The present disclosure is not limited to this example. The number of scan lines 29 utilized to measure the workpiece surface where the hole(s) 42 is to be drilled may be chosen to not only capture the holes 42 to be drilled but also may be chosen to ensure that a stable surface plane is established during the scanning process. Typically, the collective spacing of the scan lines 29 is such that scan lines 29 are performed on one side of the hole 42 to be drilled (e.g., in the Y-axis direction shown diagrammatically in FIG. 6), through the hole 42 to be drilled, and on the opposite side of the hole 42 to be drilled. In addition, the length of the scan lines 29 (e.g., along the X-axis in the diagrammatic illustration shown in FIG. 6) for a given hole 42 to be drilled may also be selected such that scan lines 29 pass through the hole 42 to be drilled and extend for a distance on either side of the hole 42. In this manner, a stable scanned measurement of the surface plane in which the holes 42 to be drilled can be established. An example of a methodology for selecting an appropriate number of scan lines 29 involves using a search radius ("SR") around the nominal position of the hole 42 to be drilled. In this example, the number of scan lines 29 to be performed ("N") is equal to or greater than the search radius ("SR") divided by the scan line spacing ("Y1"): *N = SR*/*Y*1*.* The search radius may also be used to determine the extent to which the scan lines 29 extend on either side of the hole 42 (e.g., in the X-axis direction), although in some instances the relative positioning of the holes 42 to be drilled may result in the scan lines 29 continuing (e.g., in the X-axis of the example) through all of the holes 42 to be drilled. In some embodiments, the data point spacing may be chosen as a function of the hole 42 positional tolerancing. The present disclosure is not limited to these scan line spacing criterion examples.

Once the data points 40 are captured using the workpiece geometry measuring device 24, the digital file containing the digital data point information may then be processed as described above; e.g., a comparator that receives the nominal workpiece data file (e.g., the CAD file) and the digital data file representative of the actual workpiece geometry (e.g., the scanned file containing the data points 40) may perform a 3D comparison between the between the CAD file and the scanned file to find a correlation or best fit therebetween. A compensation module may then utilize that correlation data to align the nominal workpiece data to the actual data, and project the nominal location of each hole to be drilled on the digitized actual surface to obtain the corresponding actual location and orientation for the particular hole to be drilled. As indicated above, the present disclosure is not limited to any particular methodology for comparing actual data and nominal data, and/or for producing compensation data.

The present disclosure is understood to provide considerable utility relative to systems that require a scan of the entirety of a workpiece 32. A person of skill will recognize that very often a nominal part definition will locate and position machine elements (e.g., drilled holes) within a workpiece 32 relative to one another. On the one hand, this practice is useful to ensure that position and orientation relative to the two machine elements is achieved. On the other hand, locating and positioning a first machine element within a workpiece 32 relative to a second machine element can result in a stacking of the tolerances. Hence, depending upon how much of the tolerance for the first machine element is expended during the positioning and orienting of the first element, it may be very difficult to position the second machine element within its tolerancing. The methodology of the present disclosure that includes defining an orthogonal origin of the workpiece 32, and then locating an positioning machine elements (e.g., drilled holes) relative to the origin is understood to provide desirable results. At the same time, the methodology of the present disclosure that includes utilizing a limited number of scan lines 29 with a data point spacing and a scan line spacing that is predicated on the geometry of the machine element (e.g., drilled hole) to be produced is understood to have substantially more desirable digital data computing requirements as compared to those digital data computing requirements associated with a process that utilizes a complete scan of the workpiece.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A method of drilling holes in a workpiece (32), comprising;
providing a nominal file, wherein the nominal file includes a nominal digital representation of the workpiece (32);
identifying a workpiece region having a hole (42) using the nominal file, the hole (42) having a geometry, wherein the nominal file provides a nominal hole position and a nominal hole orientation for the hole (42);
using a workpiece geometry measuring device (24) to scan at least a portion of the workpiece region, wherein the scanning includes producing a plurality of scan lines (29), each scan line (29) including a plurality of data points (40) spaced apart from one another by a data point spacing along the scan line (29), wherein the data point spacing is a function of the geometry of the hole (42), and wherein the scan lines (29) within the plurality of scan lines (29) are spaced apart from one another by a scan line spacing that is a function of the geometry of the hole (40);
using the nominal hole position and the nominal hole orientation for the hole (42) and the scan line data points in the portion of the workpiece region to determine an actual position and an actual orientation for the hole (42) to be drilled in the workpiece (32); and
drilling the hole (42) in the workpiece (32) using the determined actual position and orientation.

2. The method of claim 1, further comprising identifying a datum feature (30) of the workpiece (32) using the nominal file and using the workpiece geometry measuring device (24) to scan at least a portion of the datum feature (30), wherein the scanning of the datum feature (30) includes producing a plurality of datum feature scan lines (29); and
determining an orthogonal origin for the workpiece (32) using the nominal file and the datum feature scan lines (29).

3. The method of claim 2, wherein the step of identifying the workpiece region having the hole (42) includes using the determined orthogonal origin.

4. The method of any preceding claim, wherein the workpiece region is a limited region of the workpiece (32).

5. The method of any preceding claim, wherein within the step of using the workpiece geometry measuring device (24) to scan the portion of the workpiece region, the scanning is limited to the portion of the workpiece region.

6. The method of any preceding claim, further comprising using the nominal file to identify a transition surface (34, 36) contiguous with the workpiece region, and defining an exclusion zone (38) contiguous with the transition surface (34, 36), and directing the workpiece geometry measuring device (24) to scan the portion of the workpiece region such that the exclusion zone (38) is disposed between the transition surface (34, 36) and the portion of the workpiece region to be scanned.

7. The method of any preceding claim, wherein:
the data point spacing is a function of a tolerance data associated with the hole (42); and/or
the scan line spacing is a function of a tolerance data associated with the hole (42).

8. The method of any preceding claim, wherein the data point spacing is less than or equal to a radius of the hole (42).

9. The method of any preceding claim, wherein the scan line spacing is such that at least two scan lines (29) intersect with the hole (42).

10. The method of claim 9, wherein the plurality of scan lines (29) includes at least one or more first scan lines (29) that do not intersect with the hole (42) and are disposed on a first side of the hole (42), and at least one or more second scan lines (29) that do not intersect with the hole (42) and are disposed on a second side of the hole (42), wherein the second side of the hole (42) is opposite the first side of the hole (42), optionally wherein the number of scan lines (29) is equal to a predetermined search radius divided by the scan line spacing.

11. The method of claim 10, wherein the scan lines (29) that intersect with the hole (42) extend beyond the hole (42) on both sides of the hole (42) in the direction of the scan lines (29).

12. The method of any preceding claim, further comprising using a clocking feature to locate the workpiece region relative to the determined orthogonal origin, optionally wherein for an annular workpiece (32), the clocking feature is configured to circumferentially locate the workpiece region.

13. The method of any preceding claim, wherein the step of using the nominal hole position and the nominal hole orientation for the hole (42) and the scan line data points (40) in the portion of the workpiece region to determine the actual position and orientation for the hole (42) to be drilled in the workpiece (32), includes comparing the nominal file and the plurality of data points (40) to determine a correlation between the nominal file and the plurality of data points (40), and using the correlation to determine a compensation between the nominal file and the plurality of data points (40), and the determination of the actual position and the actual orientation for the hole (42) to be drilled in the workpiece (32) is produced using the compensation.

14. A system (20) for drilling holes in a workpiece (32), comprising;
a computer numerical controlled (CNC) laser drilling machine (22);
a workpiece geometry measuring device (24) configured to scan the workpiece (32) and produce a scan line (29) including a plurality of data points (40) spaced apart from one another by a data point (40) spacing along the scan line (29); and
a system controller (26) in communication with the CNC laser drilling machine (22), the workpiece geometry measuring device (24), and a non-transitory memory storing instructions, which instructions when executed cause the system controller (26) to:
access a nominal file that includes a nominal digital representation of the workpiece (32);
identify a workpiece region having a hole (42) using the nominal file, the hole (42) having a geometry, wherein the nominal file provides a nominal hole position and a nominal hole orientation for the hole (42);
control the workpiece geometry measuring device (24) to scan at least a portion of the workpiece region, wherein the scanning includes producing a plurality of scan lines (29), each scan line (29) including a plurality of data points (40) spaced apart from one another by a data point spacing along the scan line (29), wherein the data point spacing is a function of the geometry of the hole (42), and wherein the scan lines (29) within the plurality of scan lines (29) are spaced apart from one another by a scan line spacing that is a function of the geometry of the hole (42);
use the nominal hole position and the nominal hole orientation for the hole (42) and the scan line data points in the portion of the workpiece region to determine an actual position and an actual orientation for the hole (42) to be drilled in the workpiece (32); and
control the CNC laser drilling machine (22) to drill the hole (42) in the workpiece (32) using the determined actual position and orientation.

15. The system (20) of claim 14, wherein the instructions when executed control the workpiece geometry measuring device (24) to limit the scanning to the portion of the workpiece region, optionally wherein the plurality of scan lines (29) includes at least two said scan lines (29) that intersect with the hole (42), at least one or more first scan lines (29) that do not intersect with the hole (42) and are disposed on a first side of the hole (42), and at least one or more second scan lines (29) that do not intersect with the hole (42) and are disposed on a second side of the hole (42), wherein the second side of the hole (42) is opposite the first side of the hole (42), further optionally wherein the scan lines (29) that intersect with the hole (42) extend beyond the hole (42) on both sides of the hole (42) in the direction of the scan lines (29).
